# EUROPEAN PATENT APPLICATION

(11) **EP 2 662 644 A1**
(43) Date of publication of application: **13.11.2013**
(21) Application number: 12425087.9
(22) Date of filing: 09.05.2012
(51) Int. Cl.: F24J 2/52, F24J 2/46

(54) **Installation assembly of photovoltaic panels**

(71) Applicant: C-Lean S.r.l., 25073 Bovezzo (BS) (IT); Heliotech Energia Dal Sole S.r.l., 25074 Lavenone (BS) (IT)
(72) Inventor: Carrafini, Diego, 25073 Bovezzo, Brescia (IT); Gallo, Alessandro, 25073 Bovezzo, Brescia (IT); Mora, Giuliano, 25074 Lavenone, Brescia (IT)
(74) Representative: Pulieri, Gianluca Antonio

(57) **Abstract**

An installation assembly (1) of photovoltaic panels (100) comprising, at least one photovoltaic panel (100), at least two support beams (20) for supporting said panel (100) and positioned under it, and a frame (10) fitted to the edges of the panel suitable for blocking itself to the support beams (20), comprising longitudinal profiles (11) and/or lateral profiles (12).

The blockage of the frame (10) to the beams (20) is obtained by engagement of the attachment means (110) made on the profiles (11, 12) and of the counter attachment means (200) made on said beams (20), wherein the attachment means (110) project from the profiles (11, 12) towards the support beams (20), and/or the counter attachment means (200) project from the support beams (20) towards the profiles (11, 12).

## Description

The present invention relates to an installation assembly of photovoltaic panels.

One of the main requisites in the installation of photovoltaic panels is that they are resistant to atmospheric agents; for example they must be watertight in such a way that once installed, the water, for example rainwater, does not traverse them.

Specifically, it is necessary that both the photovoltaic panels and all the relative installation systems guarantee watertight; consequently, the installation systems of photovoltaic panels has to be taken care with their details so that all the interactions of all the components are tight.

In addition, as well as water, the photovoltaic panels installed have also to be resistant to other atmospheric agents, such as the wind.

Installation systems of photovoltaic panels suitable for fulfilling the aforementioned requirements are already present in the prior art, however said systems are particularly complex and, in particular, complex to install.

All said necessary characteristics in the installation of the panels must also marry the needs of the operators, installers, who need to install the panels in the fastest and safest manner possible.

Such purpose is achieved by an installation assembly according to claim 1, and by an assembly method according to claim 13.

In fact the installation assembly which the present invention relates to is suitable for being installed by an operator in a fast and simple manner, as can be seen also from the steps of the installation method which the present invention also relates to, fulfilling the aforementioned safety requisites.

Further characteristics and embodiments of the installation assembly of the present invention will be evident from the claims dependent on said claim; just as further advantages and further steps of the installation method of the present invention will be evident from the dependent claims. In addition, the characteristics and advantages of the installation assembly and installation method will be evident from the description below, made by way of a non-limiting example, in accordance with the appended drawings, wherein:

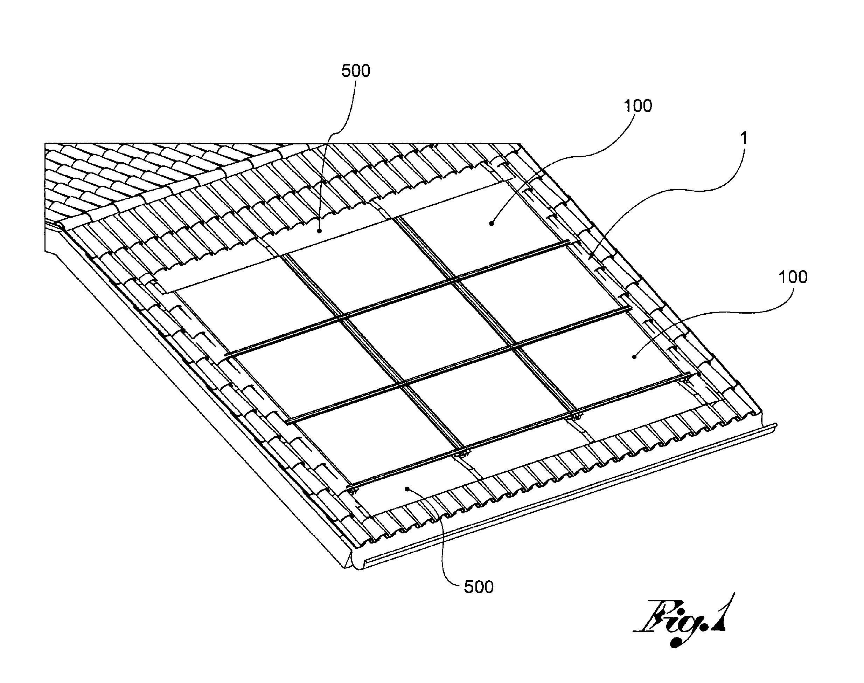

- figure 1 is a perspective view of an installation assembly of photovoltaic panels installed on a pitched roof, according to one embodiment of the invention;

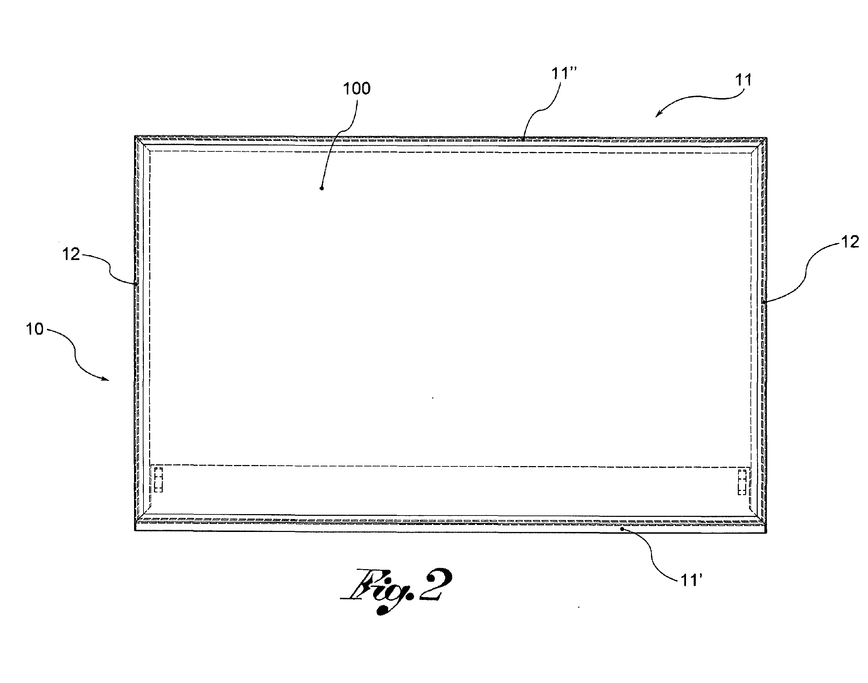

- figure 2 shows a view from above of a photovoltaic panel which a frame is fitted to, both said components are comprised in the installation assembly which the present invention relates to;

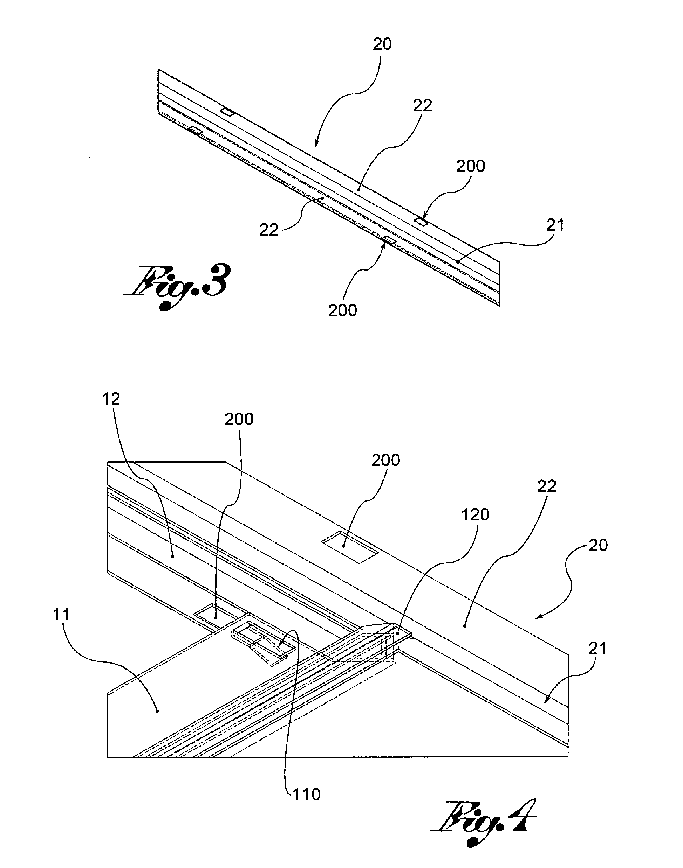

- figure 3 is a perspective view of a portion of a support beam in turn included in the installation assembly which the present invention relates to;

- figure 4 is a perspective view of a part of the assembly which the present invention relates to, in which the engagement between the frame of a panel and the corresponding support beam is shown, according to one embodiment of the assembly,

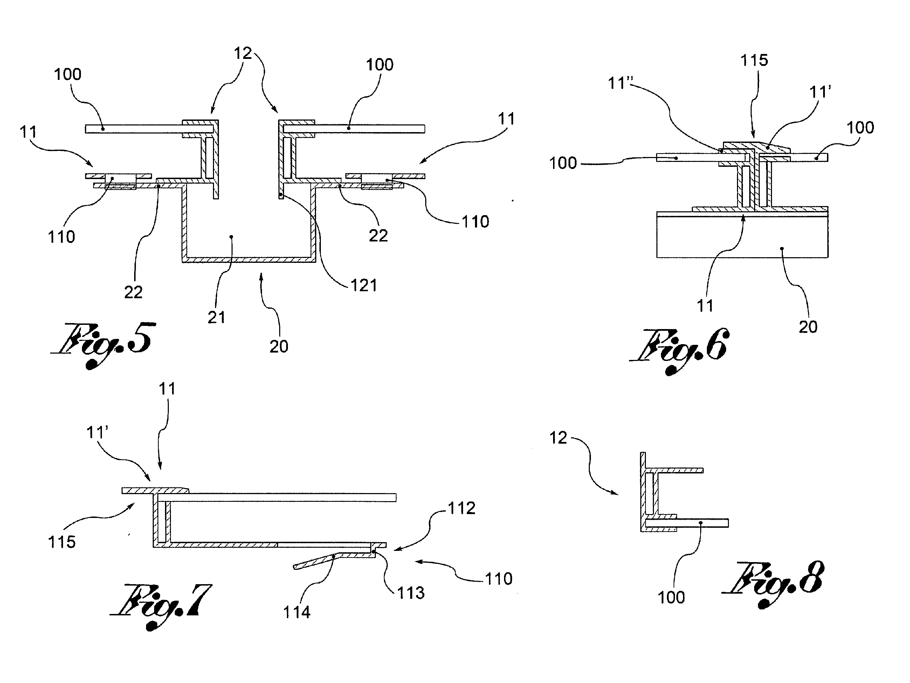

- figure 5 is a transversal cross-section of a support beam which two panels are installed on;

- figure 6 is a transversal cross-section of two panels with the respective frames fitted, positioned adjacent to each other, in such cross-sections the upper and lower longitudinal profiles fitted on the respective panels are therefore respectively sectioned, comprised in the frame part of the assembly which the present invention relates to;

- figure 7 is a transversal cross-section of a lower longitudinal profile, comprised in the frame part of the assembly which the present invention relates to;

- figure 8 is a transversal cross-section of a lateral profile, comprised in the frame part of the assembly which the present invention relates to.

With reference to the appended drawings, reference numeral 1 denotes an installation assembly of photovoltaic panels; number 100 denotes a photovoltaic panel and number 10 the frame fitted to the edges of said photovoltaic panel 100.

In a preferred embodiment, the installation assembly 1 comprises at least one photovoltaic panel 100.

Preferably, the photovoltaic panel 100 has the characteristics typical of the panels on sale and present on the market. That is to say that the photovoltaic panel 100 extends along a preferential extension plane, has two main dimensions, the longitudinal and the lateral, and one lesser dimension, the thickness; preferably it is a substantially rectangular or square shape enclosed by edges. Preferably a panel 100 therefore comprises a longitudinal edge, which extends in a longitudinal direction, preferably of greater dimensions, and a lateral edge, preferably of lesser dimensions.

The frame 10, comprised in the assembly 1 which the present invention relates to, is suitable for being fitted to the edges of the photovoltaic panel 100 with the main purpose of supporting and anchoring it.

In a preferred embodiment, the frame 10 comprises longitudinal profiles 11, attached to the longitudinal edges of the panel 10, and/or lateral profiles 12, attached to the lateral edges of the panel 10.

Preferably, both the longitudinal profiles 11 and the lateral profiles 12 have a housing portion, preferably U-shaped, suitable for housing the photovoltaic panel 100; said U-shaped housing portion is therefore at least as wide as the thickness of the panel 100 in such a way as to house the panel inside it.

Preferably, the housing portion is complementary to the thickness of the panel; the frame 10 is therefore fitted to it and by means of adhesive products, such as bi-adhesive tapes or the like, previously inserted in the housing portion, attached to it.

Preferably, the housing portions are made in the profiles in such a manner that, for example when installed on a surface, there is an air space between the panel and said surface.

In other words, in a configuration in which the installation assembly is correctly fitted to a surface, thanks to the shape of the profiles, there is a space between the fitted panels and the aforesaid surface. Air is therefore free to pass in said space suitable for cooling air, or it may be allocated to the cables needed for said panels to function.

In a preferred embodiment, the longitudinal profiles 11 divide into upper longitudinal profiles 11' and lower longitudinal profiles 11", respectively fitted to at the top and the bottom of the panel 100.

Preferably, the installation assembly 1 comprises support beams 20.

In particular the assembly 1 comprises a number of support beams 20 which can be varied according to the number of panels 100 to be installed; specifically, at least two support beams 20 are needed to install a photovoltaic panel 100.

Preferably, the frame 10 is suitable for blocking itself and therefore for blocking the panel 100 it is fitted to, to said support beams 20.

The photovoltaic panel 100 is in fact suitable for resting and for being blocked, preferably by means of the frame 10, near its edges, preferably the lateral edges, to at least two beams 20; according to a preferred embodiment, when a panel 100, and relative frame 10 on it, are installed on said beams 20, the longitudinal profiles 11 extend transversally from one support beam 20 to the other, while the lateral profiles 12 extend parallel to said beams 20.

Preferably, the support beams 20 are positioned parallel to each other, reciprocally distanced by a distance substantially equal to the longitudinal dimension of the panel 100.

In a preferred embodiment, the support beams 20 can be fitted inclined in relation to a plane parallel to the ground, for example the ground itself, or a slab. For example, in the embodiment illustrated in the appended drawings, the support beams 20 are suitable for being installed directly on pitched roofs, in place of roof tiles. In particular the support beams 20 are attached, by means of special attachment means, such as screws, rivets or the like, to the roof in place of the roof tiles, in such a way as to create the roof frame for the attachment of the various panels 100.

In further embodiments, not shown, the support beams 20 are installed inclined to a plane parallel to the ground, such as a slab, thanks to a special scaffold (not shown).

In a preferred embodiment the blockage of the frame 10 and beams 20 is obtained by engagement of the attachment means 110 made on the profiles and counter attachment means 200 made on the beams 20.

In particular in a preferred embodiment, the attachment means 110 project from the profiles towards the beams 20 and/or the counter attachment means 200 project from the beams 20 towards the profiles.

In a preferred embodiment, moreover, the attachment means 110 are made on the longitudinal profiles 11.

In a further embodiment (not shown in the drawings), the attachment means 110 are rather made on the lateral profiles 12.

Specifically, in the embodiment in which the aforementioned support beams 20 are fitted inclined, the engagement between the attachment means 110 and the counter attachment means 200 is favoured by the force of gravity. In other words, the weight itself of the panel 100 and of the frame 10 fitted to it act so that the reciprocal interaction between the attachment means 110 and the counter attachment means 200 is maintained over time, thanks in part to the force of gravity.

In addition, in a preferred embodiment, the support beams 20 are also suitable for draining water; in particular in fact the support beams 20 have a concave portion 21 for such purpose.

In other words, the support beams 20 are U-shaped.

In particular two edges 22 project laterally from said concave portion 21; preferably, the panels 100 and the relative frames 10 are therefore suitable for being supported by and resting on said edges 22.

Preferably, the edges 22 extend outwards from the concave portion 21.

Preferably, the edges 22 extend parallel to a plane; once the photovoltaic panels 100 have been installed the edges 22 extend parallel to these. Or the edges 22 extend parallel to a plane, such as the plane of the roof.

Preferably, the edges 22 extend all along the length of the support beams 20 from one end to the other.

Preferably, the edges 22 extend along the length of the beams 20 continuously in their entirety, however in further embodiment variants the edges 22 extend only in some specific portions.

In a preferred embodiment, the concave portion 21 is found positioned below the panels 100 when the assembly is installed.

In a preferred embodiment, the counter attachment means are positioned on said edges 22 as opposed to said concave portion 21.

In particular in a preferred embodiment, the counter attachment means 200 have cavities 201 which the attachment means 110 insert themselves in.

Preferably, said cavities 201 are made on the edges 22 or are made inside the concave portion 21.

Or again, in one embodiment variation the counter attachment means 200 have projections (not shown) with which the attachment means 110 are suitable for cooperating.

Preferably, said projections are made on the edges 22 or are made inside the concave portion 21; for example in one embodiment, said projection is a pin positioned transversally to the concave portion 21, in other words the pin joins the arms of the U from one side to another.

In a preferred embodiment, the attachment means 110 comprise attachment tongues 112 suitable for engaging and acting in conjunction with the counter attachment means 200.

In other words, each frame 10 fixed to a panel 100 comprises at least two attachment tongues 112, each suitable for engaging on a support beam 20 near it.

Preferably, said attachment tongues 112 are made on a single longitudinal profile 11, preferably the lower longitudinal profile 11'.

In one embodiment variation, said attachment tongues 112 are made respectively on lateral profiles 12 comprised in the frame 10.

Preferably, the attachment tongue 112 extends from the respective profile towards the support beams 20.

Preferably, in fact each attachment tongue 112 of a frame 10 is suitable for fixing itself to a beam 20 engaging with the relative counter attachment means 200.

Preferably, the attachment tongue 112 is substantially L-shaped and in particular is suitable for inserting itself in a respective cavity 201.

Specifically the attachment tongue 112 comprises a projecting portion 113 which extends outwards starting from the profile and a flap 114 which extends from said projecting portion in a manner substantially parallel to the profile, at most inclined by several degrees.

The attachment tongue 112 preferably has dimensions such that the projecting portion 113 and the flap 114 are suitable for entering the respective cavity 201.

In a configuration in which the support beams 20 are inclined and in which the attachment tongue is inserted in the cavity 201, the force of gravity keeps said attachment tongue 112 inside the cavity 201; in other words, the force of gravity keeps the attachment tongue 112 in the cavity so that the projecting portion 113 abuts with the edges delimiting the cavity 201 and the flap 114 is positioned under the support beam 20.

In further embodiment variations, rather, the tongues 112, and preferably the flap 114 are a suitable shape for acting in conjunction with the counter attachment means 200; for example the flaps 114 have a recess as opposed to a slot suitable for acting in conjunction with the projections, similarly to the variants described above.

In a preferred embodiment, the lower longitudinal profile 11' comprises a wing 115 which extends continuously between the ends of said profile, in such a way as to overhang the photovoltaic panel 100 positioned adjacent to it.

Preferably, the wing 115 is suitable for extending substantially parallel to the plane along which the photovoltaic panel 100 extends.

The wing 115 is therefore suitable for overhanging the photovoltaic panel 100, installed adjacent to the photovoltaic panel 100 to which the respective lower longitudinal profile 11' is attached, and, if present, also for overhanging the respective upper longitudinal profile 11".

Preferably, the wing 115 of the lower longitudinal profile 11' is suitable for resting on the top of the adjacent upper longitudinal profile 11"; in a preferred embodiment, therefore, the wing 115 is also suitable for keeping the photovoltaic panel 100 installed adjacent to it in position, in turn keeping it positioned on the support beams 20 positioned under it. Also to such purpose the force of gravity is therefore exploited to the most, to favour said interaction.

In a preferred embodiment, with the aim of achieving further water tightness the wing 115 is also provided with a sealing projection (not shown), preferably suitable for resting, and even flexing, on the adjacent panel 100 rather than on the adjacent upper longitudinal profile 11'.

In a preferred embodiment, the installation assembly 1 which the present invention relates to further comprises ducts 500, typically suitable for the embodiments to be installed on roofs, the purpose of which is to raise any quantity of water from the plane (or slab) of the roof to bring it above the photovoltaic panels 100 and above the roof tiles.

In a preferred embodiment, the installation assembly 1 which the present invention relates to further comprises infill elements (not shown) the purpose of which is to seal the photovoltaic panels 100 at the sides once installed, in particular at the sides of the photovoltaic panels 100 next to the sides of the assembly itself. In the embodiment in which the assembly 1 is installed on a roof, on the sides of the installation assembly which extend in a transversal direction between the ridge and the cornice, that is to say the sides next to the roof tiles, said infill elements are positioned so that the assembly is also waterproof at said sides.

In a preferred embodiment, in fact at least two ducts 500 are installed on a roof; preferably starting from the ridge of the roof towards the gutter, one duct 500 is installed above the panels 100 so that the water is raised above them, and one duct 500 is installed under the panels so that the water is raised above the roof tiles.

It may be noted that preferably the duct 500 installed above, at the ridge of the roof, is suitable for resting on the photovoltaic panel positioned uppermost, preferably on the upper longitudinal profile 11", in such a way as to fix to the roof, or to the support beams 20 the portion it co-operates with.

In addition, it may be noted that, preferably, the duct positioned lower down is also suitable for raising the water brought downstream by the support beams.

In a preferred embodiment, the lateral profiles 12 comprise a further projecting portion 121, typically suitable for inserting in the concave portion 21 of the support beam 20.

Preferably, said projecting portion 121 is suitable for creating a barrier to the water, thereby incrementing the tightness of the assembly.

Said projecting portion 121 is further suitable for limiting the lateral shifting of the panel 100 and of the relative frame 10; as well as favouring the positioning of the panels 100 on the support beams 20.

In some embodiments the attachment means 110 and the counter attachment means 200 are made precisely on said projecting portion 121.

In a preferred embodiment, the installation method of the installation assembly 1 for photovoltaic panels envisages the following steps:

- Positioning the support beams 20, so that they are parallel with each other and if necessary fixed on a plane.

In the case in which the support beams 20 are positioned inclined in relation to a plane, proceeding upwards from the gutter to the ridge:

- Positioning a panel 100 to which a respective frame 10 is fitted in such a way that the attachment means 110 engage the counter attachment means 200 on the respective support beams 20; preferably in such a manner that the attachment tongues 112 insert themselves in the respective cavities 201, until, by means of the force of gravity, the projecting portion 113 abuts with one of the edges of said cavity 20.

Subsequently, in the embodiment shown in the appended drawings:

- Positioning another panel 100, according to the previous step, in such a way that the wing 115 positions itself over the upper longitudinal profile 11".

Continuing with the series of steps as above, for the entire length of the support beams 20 and repeating the entire procedure the same number of times as there are rows of panels and depending on the area in metres of the assembly to be covered.

In the embodiment envisaging the use of ducts 500, these must be positioned before the positioning of the first panel 100 and after the positioning of the last panel 100; in some embodiments the ducts 500 are positioned before the support beams 20.

Innovatively, the installation assembly which the present invention relates to is fast and simple to install, thereby entailing a considerable saving of time for the installer.

In addition, advantageously, the installation assembly has all the characteristics typical of such type of structure; in particular the installation assembly is suitable for being watertight and resisting other atmospheric agents, such as the wind.

Advantageously, the installation of the photovoltaic panels on the support beams does not require the use of further attachment elements such as screws, rivets, glues etc.

Advantageously, the force of gravity is exploited in such a way as to keep the installation assembly installed.

Advantageously, the installation assembly is designed in such a way that the photovoltaic panels are positioned adjacent to one another on a single plane, without creating overlapping or steps between them. Advantageously, this way there are no portions of photovoltaic panel which are not used inasmuch as under other panels. Or again, advantageously, there are no points in which the atmospheric agents can easily penetrate such as between the aforesaid steps. Lastly, the overall appearance also benefits.

Advantageously, the installation assembly which the present invention relates to can be installed on roofs, even pitched roofs, or on flat structures.

Advantageously, the number of components comprised in the assembly is reduced to a minimum, entailing obvious economic advantages during manufacturing.

Advantageously, the profiles comprised in the frame are in one piece.

Advantageously, the profiles comprised in the frame are obtained by extrusion.

Advantageously, the profiles or support beams comprised in the frame are in corrosion-resistant material, preferably metal, preferably aluminium.

In one embodiment variation, the profiles comprised in the frame are obtained from more than one piece.

Advantageously, in a preferred embodiment, the lateral profiles are the same, in cross-section, as the upper longitudinal profile.

A person skilled in the art may made variations to the embodiments of the aforementioned assembly or replace elements with others functionally equivalent so as to satisfy specific requirements.

Such variants are also contained within the sphere of protection as defined by the following claims.

For example in an alternative embodiment, the attachment means are comprised on the support beams while the counter attachment means are made on the frame.

Or again the engagement between the attachment means and the counter-attachment means as described is enhanced by the snap coupling of various components, such as to increase the engagement and attachment of the same.

In further embodiment variations, to improve the engagement between the attachment means and the counter attachment means specific forms of the attachment tongue, as indeed of the cavities which they act in conjunction with, may be designed and envisaged.

In addition, each variant described as belonging to a possible embodiment may be realised independently of the other variants.

## Claims

1. Installation assembly (1) of photovoltaic panels (100) comprising:
- at least one photovoltaic panel (100);
- at least two support beams (20) suitable for supporting said photovoltaic panel (100) and positioned under it;
- a frame (10) fitted to the edges of the panel suitable for blocking itself to the support beams (20), comprising longitudinal profiles (11), transversal to said support beams (20), and /or lateral (12), parallel to said support beams (20);
wherein the blocking of the frame (10) to the beams (20) is obtained by the engagement of attachment means (110) made on the profiles (11, 12) and counter attachment means (200) made on said beams (20), wherein the attachment means (110) project from the profiles (11, 12) towards the support beams (20), and/or the counter attachment means (200) project from the support beams (20) towards the profiles (11, 12).

2. Installation assembly (1) according to claim 1, wherein the beams (20) are installed inclined in relation to a plane parallel to the ground.

3. Installation assembly (1) according to claim 2, wherein the engagement between the attachment means (110) and the counter attachment means (200) is favoured by the force of gravity.

4. Installation assembly (1) according to any of the previous claims, wherein the counter attachment means (200) have cavities (201) which the attachment means (110) insert themselves in.

5. Installation assembly (1) according to any of the claims from 1 to 3, wherein the counter attachment means (200) have projections with which the attachment means (110) co-operate.

6. Installation assembly (1) according to any of the previous claims, wherein the attachment means (110) comprise an attachment tongue (112), wherein the frame (10) comprises at least two attachment tongues (112), each suitable for engaging respectively to the relative counter attachment means (200) of a beam (20).

7. Installation assembly (1) according to any of the previous claims, wherein the frame (10) comprises an upper longitudinal profile (11") and a lower longitudinal profile (11'), wherein the lower longitudinal profile (11') comprises a wing (115), which extends continuously between the ends of the profile, suitable for overhanging the photovoltaic panel (100) installed adjacent to it and therefore, partially, its relative frame (10), specifically the upper longitudinal profile (11").

8. Installation assembly (1) according to any of the previous claims, wherein the support beams (20) are suitable for draining the water, and preferably have a concave portion (21) from which two edges project (22), suitable for supporting and laying the photovoltaic panels (110) and relative frames (10) on.

9. Installation assembly (1) according to any of the previous claims, wherein the attachment means (110), preferably the attachment tongues (112) are made on a single lower longitudinal profile (11'), at its ends.

10. Installation assembly (1) according to claims 1 to 8, wherein the attachment means (110) are made respectively on lateral profiles (12).

11. Installation assembly (1) according to any of the previous claims, wherein the counter attachment means (200) are made on the edges (22) of the support beams (20).

12. Installation assembly (1) according to any of the previous claims, wherein the counter attachment means (200) are made on the concave portion (21).

13. Installation method of an installation assembly (1) for photovoltaic panels (100) according to any of the previous claims, comprising the step of:
- positioning the support beams (20), so that they are parallel with each other and if necessary fixed on a plane;
- positioning a panel (100), to which a respective frame (10) is fitted, in such a way that the attachment means (110) engage the counter attachment means (200) on the respective support beams (20);
- repeating the previous step for each panel (100).
